# EUROPEAN PATENT APPLICATION

(11) **EP 3 090 931 A1**
(43) Date of publication of application: **09.11.2016**
(21) Application number: 16164972.8
(22) Date of filing: 12.04.2016
(51) Int. Cl.: B62H 3/06, B25H 1/00

(54) **MOTORCYCLE STAND**

(30) Priority: 13.04.2015 IT UB20150629
(71) Applicant: G.L.E.N. S.N.C. di Guaraldi Gianni e Cristian E C., 44045 Renazzo - Cento (Ferrara) (IT)
(72) Inventor: GUARALDI, Cristian, 40014 CREVALCORE (BOLOGNA) (IT)
(74) Representative: Dall'Olio, Christian

(57) **Abstract**

A folding stand (1) for raising a motor vehicle, comprising: a first U-shaped longitudinal member (2) comprising a first end portion (2a) and a second end portion (2b); a second longitudinal member (3) and a third longitudinal member (4) each comprising a first end portion (3a, 4a) and a second end portion (3b, 4b); fixing means, for removably fixing the folding stand (1) to the motor vehicle, which are borne by the third longitudinal member (4); a first hinge (50) at which the first longitudinal member (2) and the second longitudinal member (3) are hinged; a second hinge (51) to which the second longitudinal member (3) and the third longitudinal member (4) are hinged.

The first longitudinal member (2), the second longitudinal member (3) and the third longitudinal member (4) are reciprocally hinged so that the stand (1) is mobile between a use configuration (A) and a minimum size configuration (B).

## Description

### DESCRIPTION OF THE INVENTION

The present invention relates to the technical sector of stands for motor vehicles. In particular, the invention relates to a folding stand for at least partly raising a motor vehicle.

Stands for raising motor vehicles are generally used in pairs with the aim of raising the motor vehicle both at the front and the rear. They can be fixed, for example, to the fork or the underside of the motor vehicle.

A known stand comprises a first U-shaped longitudinal member. A second longitudinal member is fixed to the first longitudinal member at an end thereof so as to form an angle of about 80° therewith. Usually the first longitudinal member and the second longitudinal member are conformed in a single body; alternatively they can be welded together. Further, a seating is rigidly fixed to the free end of the second longitudinal member, especially for receiving fixing means so as to enable removably fixing the stand to the motor vehicle. It is specified that the fixing means are variable on the basis of the marque and model of a motor vehicle and, consequently, different motor vehicles require different fixing means that in turn require an appropriate seating. Consequently a known stand is usable for raising only one model of motor vehicle, or in any case a limited number of motor vehicle models.

Further, the stand of known type is a rigid body and has dimensions that increase proportionally to the cubic capacity of the motor vehicle and the dimensions of the wheels thereof. The size of the stand makes transport thereof difficult, as it necessarily requires use of a motor vehicle. For this reason, a motorcyclist deciding to use his or her motor vehicle to move cannot take the above-described stand with him or her. Further, in a case where more than one stand has to be carried (for example in the case of a motorcycling club), the conformation thereof does not enable optimisation of the space they occupy.

In the light of the above, the aim of the present invention consists in obviating the above-mentioned drawbacks. The above aims are attained by a folding stand according to claim 1.

The folding stand of the invention, by means of the first and second hinges, enables moving the folding stand between a use configuration (in which the folding stand is similar to the known stand) and a minimum size configuration. In particular, when the stand is in the minimum size configuration, it can be transported easily as it has extremely small dimensions (it can be contained in a usual backpack). A motorcyclist deciding to use his or her motor vehicle to move can advantageously take the above-described folding stand with him or her. Further, in a case where more than one stand has to be carried (for example in the case of a motorcycling club), the folding stand has a conformation that enables optimisation of the space they occupy.

Specific embodiments of the invention will be described in the following part of the present description, according to what is set down in the claims and with the aid of the appended tables of drawings, in which:
- figures 1-7 illustrate, in perspective views, various embodiments of the folding stand of the present invention;
- figures 8A-8D illustrate, in perspective views, a part of the stand of figure 5 in different configurations;
- figures 9 and 10 illustrate, in lateral views, an embodiment of the blocking means respectively in a non-operative and operative configuration;
- figure 11 is a view from above of figure 10.

With reference to the appended tables of drawings, reference numeral (1) denotes in its entirety a folding stand that is the object of the present invention.

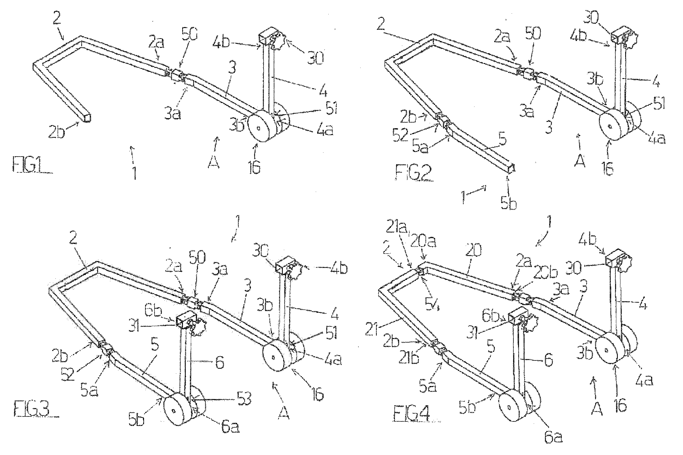

The folding stand (1) (see figure 1) comprises a U-shaped first longitudinal member (2) comprising a first end portion (2a) and a second end portion (2b); a second longitudinal member (3) and a third longitudinal member (4) each comprising a first end portion (3a, 4a) and a second end portion (3b, 4b); fixing means, for removably fixing the folding stand (1) to the motor vehicle, which are borne by the third longitudinal member (4). The folding stand (1) further comprises a first hinge (50) at which the first end portion (2a) of the first longitudinal member (2) and the first end portion (3a) of the second longitudinal member (3) are hinged to one another in order to enable folding the first longitudinal member (2) towards the second longitudinal member (3) and vice versa; a second hinge (51) at which the second end portion (3b) of the second longitudinal member (3) and the first end portion (4a) of the third longitudinal member (4) are hinged to one another in order to enable folding the second longitudinal member (3) towards the third longitudinal member (4) and vice versa. The first longitudinal member (2), the second longitudinal member (3) and the third longitudinal member (4) are reciprocally hinged so that the folding stand (1) is mobile between a use configuration (A), in which the first longitudinal member (2) and the second longitudinal member (3) are arranged so as to form between them an angle of greater than 90° and the third longitudinal member (4) and the second longitudinal member (3) are arranged so as to form between them an angle comprised between 50° and 90°, and a configuration of minimum size (B) in which the first longitudinal member (2), the second longitudinal member (3) and the third longitudinal member (4) are folded between one another so as to reduce the size of the folding stand (1) to a minimum.

The first longitudinal member (2), the second longitudinal member (3) and the third longitudinal member (4) can be tubular. Advantageously, the weight of the folding stand (1) is low.

Preferably, when the folding stand (1) is in the use configuration (A), the angle between the third longitudinal member (4) and the second longitudinal member (3) is comprised between 70° and 90°. Preferably, when the folding stand (1) is in the use configuration (A), the angle between the first longitudinal member (2) and the second longitudinal member (3) is greater than 120°.

Preferably, when the folding stand (1) is in the minimum size (B) configuration, the third longitudinal member (4) contacts the second longitudinal member (3) and the first longitudinal member (2). Alternatively, when the folding stand (1) is in the minimum size (B) configuration, the third longitudinal member (4) can contact the second longitudinal member (3) which can contact and the first longitudinal member (2).

With reference to the embodiment of figure 2, the folding stand (1) of claim 1, preferably comprises: a fourth longitudinal member (5) comprising a first end portion (5a) and a second end portion (5b); a third hinge (52) at which the second end portion (2b) of the first longitudinal member (2) and the first end portion (5a) of the fourth longitudinal member (5) are hinged so as to enable folding the first longitudinal member (2) towards the fourth longitudinal member (5) and vice versa when the folding stand (1) is in the use configuration (A), the first longitudinal member (2) and the fourth longitudinal member (5) are arranged such as to form between them an angle of greater than 90° and so that when the folding stand (1) is in the configuration of minimum size (B) the first longitudinal member (2) and the fourth longitudinal member (5) are folded between one another to reduce the size of the folding stand (1) to a minimum.

This embodiment advantageously ensures a reduced size while giving a greater stability of the folding stand (1), when in use.

The fourth longitudinal member (5) can be tubular. Advantageously, the weight of the folding stand (1) is low. The fourth longitudinal member (5) can be opposite the second longitudinal member (3).

Preferably, when the folding stand (1) is in the use configuration (A), the angle between the first longitudinal member (2) and the fourth longitudinal member (5) is greater than 120°. Preferably, when the folding stand (1) is in the minimum size (B) configuration, the fourth longitudinal member (5) contacts the first longitudinal member (2).

With reference to the embodiment of figure 3, the folding stand (1) preferably comprises: a fifth longitudinal member (6) which comprises a first end portion (6a) and a second end portion (6b); the fixing means (10) being also borne by the fifth longitudinal member (6); a fourth hinge (53) at which the second end portion (5b) of the fourth longitudinal member (5) and the first end portion (6a) of the fifth longitudinal member (6) are hinged to one another in order to enable folding the fourth longitudinal member (5) towards the fifth longitudinal member (6) and vice versa so that when the folding stand (1) is in the use configuration (A), the fifth longitudinal member (6) and the fourth longitudinal member (5) are arranged so as to form between them an angle comprised between 50° and 90°, and so that when the folding stand (1) is in the configuration of minimum size (B), the fourth longitudinal member (5) and the fifth longitudinal member (6) are folded between them to reduce the size of the folding stand (1) to a minimum. This embodiment advantageously enables fixing the folding stand (1) to the motor vehicle bilaterally, ensuring a greater stability while having a smaller size.

The fifth longitudinal member (6) can be tubular. Advantageously, the weight of the folding stand (1) is low.

Preferably, when the folding stand (1) is in the use configuration (A), the angle between the fifth longitudinal member (6) and the fourth longitudinal member (5) is comprised between 70° and 90°. The fifth longitudinal member (6) can be coplanar to the third longitudinal member (4).

Preferably, when the folding stand (1) is in the minimum size (B) configuration, the fifth longitudinal member (6) contacts the fourth longitudinal member (5) and the first longitudinal member (2). Preferably, when the folding stand (1) is in the minimum size (B) configuration, the fifth longitudinal member (6) can contact the fourth longitudinal member (5) which can contact the first longitudinal member (2).

With reference to figure 4 the first longitudinal member (2) preferably comprises a first length (20) and a second length (21) each comprising a first end portion (20a, 21 a) and a second end portion (20b, 21 b), and a second end portion (20b, 21b). In this embodiment the folding stand (1) further comprises a fifth hinge (54) at which at which the first end portion (20a) of the first length (20) and the first end portion (21 a) of the second length (21) are mutually hinged to enable folding the first portion (20) towards the second portion (21) and vice versa so that, so that when the folding stand (1) is in the use configuration (A), the first length (20) and the second length (21) are arranged so as to form between them an angle of greater than 90°and so that when the folding stand (1) is in the configuration of minimum size (B) the first length (20) and the second length (21) are folded with respect to one another to reduce the size of the folding stand (1) to a minimum. This embodiment advantageously further enables reducing the size of the folding stand (1).

Preferably, when the folding stand (1) is in the use configuration (A), the first length (20) and the second length (21) are coplanar.

When the folding stand (1) is in the configuration of minimum size (B) the first end portion (20a) of the first length (20) and the first end portion (21 a) of the second length (21) are preferably arranged such as to form an angle of 90° between them.

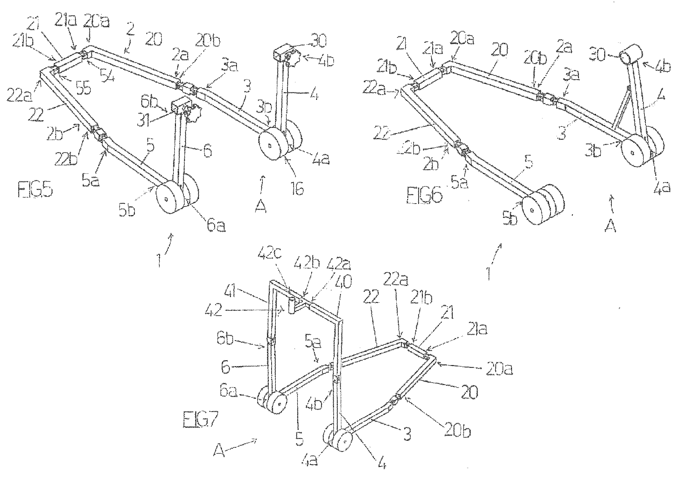

According to one of the embodiment of figures 5-7, the first longitudinal member (2) can comprise, as well as the first length (20) and the second length (21), a third length (22) comprising a first end portion (22a) and a second end portion (22b). In these embodiments the folding stand (1) further comprises a sixth hinge (55) at which at which the first end portion (22a) of the third length (22) and the second end portion (21b) of the second length (21) are mutually hinged to enable folding the third portion (22) towards the second portion (21) and vice versa so that when the folding stand (1) is in the use configuration (A), the third length (22) and the second length (21) are arranged so as to form between them an angle of greater than 90° and so that when the folding stand (1) is in the configuration of minimum size (B) the third length (22) and the second length (21) are folded with respect to one another to reduce the size of the folding stand (1) to a minimum.

This embodiment advantageously further enables reducing the size of the folding stand (1).

Preferably, when the folding stand (1) is in the use configuration (A), the first length (20), the second length (21) and the third length (22) are coplanar.

When the folding stand (1) is in the configuration of minimum size (B) the first end portion (22a) of the third length (22) and the second end portion (21b) of the second length (21) are preferably arranged such as to form an angle of 90° between them.

The folding stand (1) preferably comprises blocking means for blocking, when the folding stand (1) is in the use configuration (A), the first hinge (50) and/or the second hinge (51) and/or the third hinge (52) and/or the fourth hinge (53) and/or the fifth hinge (54) and/or the sixth hinge (55).

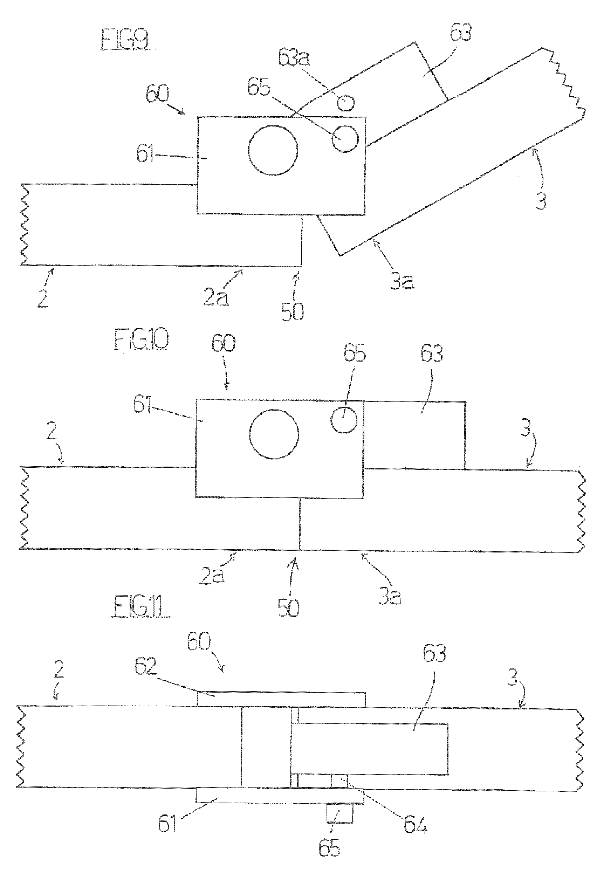

With the aim of blocking the first hinge (50), the blocking means can comprise a first blocking structure (60) arranged in proximity of the first hinge (50). The first blocking structure (60) can comprise (see figures 9-11): a first plate (61) and a second plate (62) which are fixed opposite to the first end portion (2a) of the first longitudinal member (2), respectively at a first side and a second side of the first longitudinal member (2); a connecting element (63), for connecting the first end portion (2a) of the first longitudinal member (2) and the first end portion (3a) of the second longitudinal member (3), which connecting element (63) is rotatably constrained to the first plate (61) and to the second plate (62), is fixed to the first end portion (3a) of the second longitudinal member (3), and has a hole (63a); a pin (64), borne by the first plate (61) or by the second plate (62), which is conformed so as to engage with the hole (63a) of the connecting element (63); the first plate (61), the second plate (62), the connecting element (63) and the pin (64) being reciprocally arranged and conformed so that, when the folding stand (1) is in the use configuration (A), the pin (64) engages in the hole (63a) blocking the first hinge (50) (figure 10 and 11) and the first end portion (2a, 3a) of the first longitudinal member (2) and the second longitudinal member (3) abut against one another.

Alternatively the first plate (61) and the second plate (62) might be fixed opposite the first end portion (3a) of the second longitudinal member (3), respectively at a first side and a second side of the second longitudinal member (3), and the connecting element might be fixed to the first end portion (2a) of the first longitudinal member (2).

The pin (64) can be threaded or can be of a spring type. The pin (64) can be connected to a regulating knob (65) of the position of the pin (64).

With the aim of blocking the second hinge (51), the blocking means can comprise a second blocking structure (not illustrated) arranged in proximity of the second hinge (51). The second blocking structure is alike to the first blocking structure (60) with the difference that the first plate and the second plate might be fixed opposite the second end portion (3b) of the second longitudinal member (3), and the connecting element might be fixed to the first end portion (4a) of the third longitudinal member (4), and vice versa.

With the aim of blocking the third hinge (52), the blocking means can comprise a third blocking structure (not illustrated) arranged in proximity of the third hinge (52). The third blocking structure is alike to the first blocking structure (60) with the difference that the first plate and the second plate might be fixed opposite the second end portion (2b) of the first longitudinal member (2), and the connecting element might be fixed to the first end portion (5a) of the fourth longitudinal member (5), and vice versa.

With the aim of blocking the fourth hinge (53), the blocking means can comprise a fourth blocking structure (not illustrated) arranged in proximity of the fourth hinge (53). The fourth blocking structure is alike to the first blocking structure (60) with the difference that the first plate and the second plate might be fixed to the second end portion (5b) of the fourth longitudinal member (5), and the connecting element might be fixed to the first end portion (6a) of the fifth longitudinal member (6), or vice versa.

With the aim of blocking the fifth hinge (54), the blocking means can comprise a fifth blocking structure (not illustrated) arranged in proximity of the fifth hinge (54). The fifth blocking structure is alike to the first blocking structure (60) with the difference that the first plate and the second plate might be fixed to the first end portion (20a) of the first length (20), and the connecting element might be fixed to the first end portion (21 a) of the second portion (21), and vice versa.

With the aim of blocking the sixth hinge (55), the blocking means can comprise a sixth blocking structure (not illustrated) arranged in proximity of the sixth hinge (55). The sixth blocking structure is alike to the first blocking structure with the difference that the first plate and the second plate might be fixed to the second end portion (21 b) of the second length (21), and the connecting element might be fixed to the first end portion (22a) of the third portion (22), or vice versa.

According to a different embodiment of the blocking means, not illustrated in the figures, the blocking means can comprise, for each hinge, a pair of half-shells rigidly fixable to one another. The pair of half-shells is conformed so that when coupled they can envelop the relative hinge and can be rigidly fixed to one another and to the folding stand (1) (for example by means of a nut and bolt system).

In some preferred embodiments of the folding stand (1), it can comprise a first seating (30) removably fixable to the second end portion (4b) of the third longitudinal member (4), which first seating (30) is conformed so as to receive the fixing means (figures1, 2 and 6, the folding stand (1) is the "single arm"). Therefore, as the first seating (30) is removably fixable to the third longitudinal member (4) (for example using nuts and bolts), it is simply and rapidly possible to replace the first seating (30) with one having a different conformation. The folding stand (1) is advantageously adaptable to any model of motor vehicle.

The third longitudinal member (4) can be telescopic. The position of the first seating (30) and therefore the fixing means can advantageously be height-adjusted. Alternatively the first seating (30) can be constrained to a relative longitudinal member which is removably fixable (for example with nuts and bolts) to the third longitudinal member (4) which is conformed so as to height-adjust the position of the first seating (30).

With reference to figures 3-5, the folding stand (1) can comprise a second seating (31) removably fixable to the second end portion (6b) of the fifth longitudinal member (6). The second seating (30) is also conformed for receiving the fixing means (the folding stand (1) is known as "double arm"). Therefore, as the second seating (31) is removably fixable to the fifth longitudinal member (6) (for example using nuts and bolts), it is simply and rapidly possible to replace the second seating (31) with one having a different conformation. The folding stand (1) is advantageously adaptable to any model of motor vehicle.

The fifth longitudinal member (6) can be telescopic. The position of the fixing means can advantageously be height-adjusted. Alternatively the second seating (31) can be constrained to a relative longitudinal member which is removably fixable (for example with nuts and bolts) to the fifth longitudinal member (6) which is conformed so as to height adjust the position of the second seating (31).

With further reference to figures 1-6, the fixing means have not been illustrated as they are of known type and variable according to the model of motor vehicle (these fixing means can be, for example, fixed to the fork of the motor vehicle wheel).

With reference to figure 7, a particular embodiment of the folding stand can comprise: a sixth L-shaped longitudinal member (40) hinged to the second end portion (4b) of the third longitudinal member (4) so that when the folding stand (1) is in the use configuration (A), the sixth longitudinal member (40) and the third longitudinal member (4) are arranged so as to form between them an angle of greater than 90° (preferably 180°) and so that, when the folding stand (1) is in the configuration of minimum size (B), the sixth longitudinal member (40) is folded towards the third longitudinal member (4) so as to reduce to a minimum a size of the folding stand (1); a seventh L-shaped longitudinal member (41) hinged to the second end portion (6b) of the fifth longitudinal member (6) so that, when the folding stand (1) is in the use configuration (A), the seventh longitudinal member (41) and the fifth longitudinal member (6) are arranged so as to form between them an angle of greater than 90° (preferably 180°) and so that, when the folding stand (1) is in the configuration of minimum size (B), the seventh longitudinal member (41) is folded towards the fifth longitudinal member (6) so as to reduce to a minimum the size of the folding stand (1). In this embodiment the fixing means comprise a fixing element (42) having a T shape and being fixable to the sixth longitudinal member (40), to the seventh longitudinal member (41) and to the motor vehicle.

In this embodiment, when the folding stand (1) is to be moved from the use configuration (A) to the minimum size configuration (B), the fixing element (42) can be removed or can be fixed to only one between the sixth longitudinal member (40) and the seventh longitudinal member (41).

Alternatively, in this embodiment, the sixth longitudinal member (40) and the seventh longitudinal member (41) can be rigidly hinged respectively to the third longitudinal member (4) and the fifth longitudinal member (6). In this case, when the folding stand (1) is to be moved from the use configuration (A) to the minimum size configuration (B), the sixth longitudinal member (40) and the seventh longitudinal member (41) can be removed.

Preferably, the folding stand (1) comprises rolling means (16) arranged in such a way as to facilitate the application of the folding stand (1) to the motor vehicle, when the folding stand (1) is in the use configuration (A). The rolling means (16) can comprise a first wheel fixed rotatably in proximity of the second hinge. Further, the rolling means can comprise a second wheel fixed rotatably in proximity of the fourth hinge.

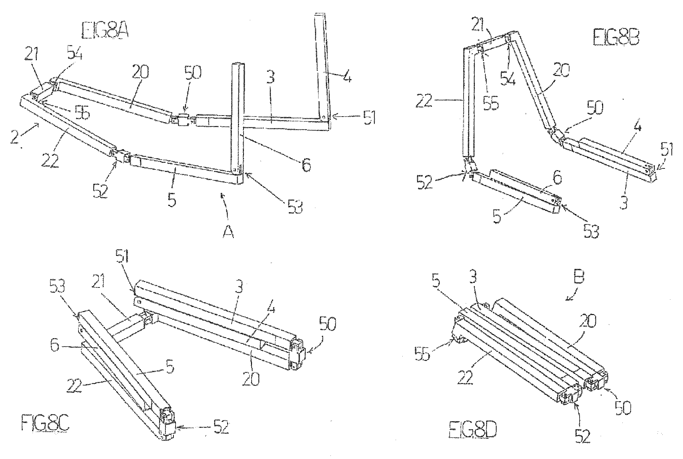

With reference to figures 8A-8D, a part of the folding stand (1) of figure 5 is illustrated in different configurations going from the use configuration (figure 8A) to the minimum size configuration (figure 8D). Figure 8A illustrates a part of the folding stand (1) of figure 5 in the use configuration (A). Figure 8B illustrates the stand of figure 8A wherein the third longitudinal member (4) and the fifth longitudinal member (6) have been bent in contact respectively with the second longitudinal member (3) and the fourth longitudinal member (5). With reference to figure 8C, the second longitudinal member (3) and the fourth longitudinal member (5) have been bent towards the first longitudinal member (2) so that the third longitudinal member (4) and the fifth longitudinal member (6) contact respectively the first length (20) and the third length (22) of the first longitudinal member (2). Lastly, figure 8d illustrates the minimum size configuration of minimum (B) for the folding stand of figure 5.

## Claims

1. A folding stand (1) for raising a motor vehicle, comprising: a first U-shaped longitudinal member (2) comprising a first end portion (2a) and a second end portion (2b); a second longitudinal member (3) and a third longitudinal member (4) each comprising a first end portion (3a, 4a) and a second end portion (3b, 4b); fixing means, for removably fixing the folding stand (1) to the motor vehicle, which are borne by the third longitudinal member (4);
the folding stand (1) being **characterised in that** it comprises:
a first hinge (50) at which the first end portion (2a) of the first longitudinal member (2) and the first end portion (3a) of the second longitudinal member (3) are hinged to one another in order to enable folding the first longitudinal member (2) towards the second longitudinal member (3) and vice versa;
a second hinge (51) at which the second end portion (3b) of the second longitudinal member (3) and the first end portion (4a) of the third longitudinal member (4) are hinged to one another in order to enable folding the second longitudinal member (3) towards the third longitudinal member (4) and vice versa;
the first longitudinal member (2), the second longitudinal member (3) and the third longitudinal member (4) being reciprocally hinged so that the folding stand (1) is mobile between a use configuration (A), in which the first longitudinal member (2) and the second longitudinal member (3) are arranged so as to form between them an angle of greater than 90° and the third longitudinal member (4) and the second longitudinal member (3) are arranged so as to form between them an angle comprised between 50° and 90°, and a configuration of minimum size (B) in which the first longitudinal member (2), the second longitudinal member (3) and the third longitudinal member (4) are folded among one another so as to reduce the size of the folding stand (1) to a minimum.

2. The folding stand (1) of claim 1, comprising: a fourth longitudinal member (5) comprising a first end portion (5a) and a second end portion (5b); a third hinge (52) at which the second end portion (2b) of the first longitudinal member (2) and the first end portion (5a) of the fourth longitudinal member (5) are hinged so as to enable folding the first longitudinal member (2) towards the fourth longitudinal member (5) and vice versa so that when the folding stand (1) is in the use configuration (A), the first longitudinal member (2) and the fourth longitudinal member (5) are arranged such as to form between them an angle of greater than 90° and so that when the folding stand (1) is in the configuration of minimum size (B) the first longitudinal member (2) and the fourth longitudinal member (5) are folded among one another so as to reduce the size of the folding stand (1) to a minimum.

3. The folding stand (1) of claim 2, comprising: a fifth longitudinal member (6) which comprises a first end portion (6a) and a second end portion (6b); the fixing means (10) being also borne by the fifth longitudinal member (6); a fourth hinge (53) at which the second end portion (5b) of the fourth longitudinal member (5) and the first end portion (6a) of the fifth longitudinal member (6) are hinged to one another in order to enable folding the fourth longitudinal member (5) towards the fifth longitudinal member (6) and vice versa so that when the folding stand (1) is in the use configuration (A), the fifth longitudinal member (6) and the fourth longitudinal member (5) are arranged so as to form between them an angle comprised between 50° and 90°, and so that when the folding stand (1) is in the configuration of minimum size (B), the fourth longitudinal member (5) and the fifth longitudinal member (6) are folded between them in order to reduce the size of the folding stand (1) to a minimum.

4. The folding stand (1) of any one of claims from 1 to 3, wherein the first longitudinal member (2) comprises a first length (20) and a second length (21) each comprising a first end portion (20a, 21 a) and a second end portion (20b, 21 b), and wherein the folding stand (1) comprises a fifth hinge (54) at which the first end portion (20a) of the first length (20) and the first end portion (21 a) of the second length (21) are mutually hinged to enable folding the first portion (20) towards the second portion (21) and vice versa so that when the folding stand (1) is in the use configuration (A), the first length (20) and the second length (21) are arranged so as to form between them an angle of greater than 90°and so that when the folding stand (1) is in the configuration of minimum size (B) the first length (20) and the second length (21) are folded with respect to one another so as to reduce the size of the folding stand (1) to a minimum.

5. The folding stand (1) of claim 4, wherein the first longitudinal member (2) comprises a third length (22) comprising a first end portion (22a) and a second end portion (22b), and wherein the folding stand (1) comprises a sixth hinge (55) at which the first end portion (22a) of the third length (22) and the second end portion (21 b) of the second length (21) are reciprocally hinged to enable folding the third length (22) towards the second length (21) and vice versa so that when the folding stand (1) is in the use configuration (A), the third length (22) and the second length (21) are arranged so as to form between them an angle of greater than 90° and so that when the folding stand (1) is in the configuration of minimum size (B), the third length (22) and the second length (21) are folded with respect to one another so as to reduce the size of the folding stand (1) to a minimum.

6. The folding stand (1) of any one of claims from 1 to 5, comprising blocking means for blocking, when the folding stand (1) is in the use configuration (A), the first hinge (50) and/or the second hinge (51) and/or the third hinge (52) and/or the fourth hinge (53) and/or the fifth hinge (54) and/or the sixth hinge (55).

7. The folding stand (1) of claim 6, wherein the blocking means comprise a first blocking structure (60) arranged in proximity of the first hinge (50) which comprises: a first plate (61) and a second plate (62) which are fixed opposite to the first end portion (2a) of the first longitudinal member (2), respectively at a first side and a second side of the first longitudinal member (2); a connecting element (63), for connecting the first end portion (2a) of the first longitudinal member (2) and the first end portion (3a) of the second longitudinal member (3), which connecting element (63) is rotatably constrained to the first plate (61) and to the second plate (62), is fixed to the first end portion (3a) of the second longitudinal member (3), and has a hole (63a); a pin (64), borne by the first plate (61) or by the second plate (62), which is conformed so as to engage with the hole (63a) of the connecting element (63); the first plate (61), the second plate (62), the connecting element (63) and the pin (64) being reciprocally arranged and conformed so that, when the folding stand (1) is in the use configuration (A), the pin (64) engages in the hole (63a) blocking the first hinge (50).

8. The folding stand (1) of any one of claims from 1 to 7, comprising a first seating (30) removably fixable in proximity of the second end portion (4b) of the third longitudinal member (4), which first seating (30) is conformed so as to receive the fixing means.

9. The folding stand (1) of any one of claims from 3 to 8, comprising a second seating (31) removably fixable to the second end portion (6b) of the fifth longitudinal member (6), which second seating (31) is conformed so as to receive the fixing means.

10. The folding stand (1) of claim 3, comprising: a sixth L-shaped longitudinal member (40) hinged to the second end portion (4b) of the third longitudinal member (4) so that when the folding stand (1) is in the use configuration (A), the sixth longitudinal member (40) and the third longitudinal member (4) are arranged so as to form between them an angle of greater than 90° and so that, when the folding stand (1) is in the configuration of minimum size (B), the sixth longitudinal member (40) is folded towards the third longitudinal member (4) so as to reduce to a minimum a size of the folding stand (1); a seventh L-shaped longitudinal member (41) hinged to the second end portion (6b) of the fifth longitudinal member (6) so that, when the folding stand (1) is in the use configuration (A), the seventh longitudinal member (41) and the fifth longitudinal member (6) are arranged so as to form between them an angle of greater than 90° and so that, when the folding stand (1) is in the configuration of minimum size (B), the seventh longitudinal member (41) is folded towards the fifth longitudinal member (6) so as to reduce to a minimum the size of the folding stand (1); wherein the fixing means comprise a T-shaped fixing element (42) fixable to the sixth longitudinal member (40), to the seventh longitudinal member (41) and to the motor vehicle.
